# EUROPÄISCHE PATENTSCHRIFT

(11) **EP 3 233 559 B1**
(45) Veröffentlichungstag und Bekanntmachung des Hinweises auf die Patenterteilung: **06.03.2019**
(21) Anmeldenummer: 15816706.4
(22) Anmeldetag: 14.12.2015
(51) Int. Cl.: B60K 37/06, G06F 3/0488

(54) **VERFAHREN ZUM BETREIBEN EINER BEDIENANORDNUNG FÜR EIN KRAFTFAHRZEUG MIT BEREITSTELLEN VON ZWEI BEDIENMODI FÜR EIN BEDIENELEMENT, BEDIENANORDNUNG SOWIE KRAFTFAHRZEUG**
METHOD FOR OPERATING AN OPERATING ARRANGEMENT FOR A MOTOR VEHICLE WITH THE PROVISION OF TWO OPERATING MODES FOR AN OPERATING ELEMENT, OPERATING ARRANGEMENT AND MOTOR VEHICLE
PROCÉDÉ DE FONCTIONNEMENT D'UN DISPOSITIF DE COMMANDE POUR VÉHICULE AUTOMOBILE AVEC PRODUCTION DE DEUX MODES DE COMMANDE POUR UN ÉLÉMENT DE COMMANDE, DISPOSITIF DE COMMANDE ET VÉHICULE AUTOMOBILE

(30) Priorität: 18.12.2014 DE 102014118956
(43) Veröffentlichungstag der Anmeldung: 25.10.2017
(73) Patentinhaber: Valeo Schalter und Sensoren GmbH, 74321 Bietigheim-Bissingen (DE)
(72) Erfinder: STAUDE, Sascha, 74321 Bietigheim-Bissingen (DE); KAISER, Frank, 74321 Bietigheim-Bissingen (DE)
(86) Internationale Anmeldenummer: PCT/EP2015/079559
(87) Internationale Veröffentlichungsnummer: WO 2016/096702

(56) Entgegenhaltungen:
- US-A1- 2006 047 386

## Beschreibung

Die vorliegende Erfindung betrifft ein Verfahren zum Betreiben einer Bedienanordnung für ein Kraftfahrzeug, bei welchem mittels eines Bedienelements, welches an einem Lenkrad des Kraftfahrzeugs angeordnet ist und welches einen berührungsempfindlichen Bildschirm aufweist, eine Berührung des Bedienelements mit zumindest einem Finger als Bedienhandlung erfasst wird und mittels einer Steuereinrichtung ein Gerät in Abhängigkeit von der erfassten Bedienhandlung angesteuert wird. Die Erfindung betrifft außerdem eine Bedienanordnung für ein Kraftfahrzeug. Schließlich betrifft die Erfindung ein Kraftfahrzeug mit einer solchen Bedienanordnung.

Das Dokument US 2006/047386 A1 offenbart den Oberbegriff des Anspruchs 1.

Das Interesse richtet sich vorliegend insbesondere auf Bedienanordnung für Kraftfahrzeuge. Derartige Bedienanordnungen können beispielsweise Bedienelemente umfassen, mit denen eine Bedienhandlung erfasst werden kann. Diese Bedienelemente können beispielsweise an dem Lenkrad des Kraftfahrzeugs angeordnet sein. Infolge der erfassten Bedienhandlung kann mit einer Steuereinrichtung eine Funktionseinrichtung des Kraftfahrzeugs angesteuert beziehungsweise bedient werden. Mit solchen Bedienelementen kann beispielsweise ein Informations- und/oder Unterhaltungssystem, eine Kommunikationseinrichtung, ein Fahrerassistenzsystem oder dergleichen bedient werden.

Aus dem Stand der Technik sind Bedienelemente bekannt, die an dem Lenkrad des Kraftfahrzeugs angeordnet sind und die beispielsweise als sogenannte Lenkradschalter ausgebildet sind. Diese Lenkradschalter umfassen beispielsweise einen mechanischen Schalter, insbesondere einen Mikroschalter, über dem eine Gummimatte oder eine andere Abdeckung angeordnet ist. Des Weiteren sind Bedienelemente für Lenkräder bekannt, welche berührungssensitive Sensoren umfassen. Derartige Sensoren können beispielsweise als kapazitive oder resistive Sensoren ausgebildet sein. Dabei dient jeder Schalter beziehungsweise jeder Sensor nur zur Bedienung einer einzigen Fahrzeugfunktion beziehungsweise einer einzigen Funktionseinrichtung des Kraftfahrzeugs. Aufgrund der steigenden Anzahl von Fahrzeugfunktionen nimmt auch die Anzahl der Bedienelemente am und/oder im Lenkrad zu. Dies hat zur Folge, dass der Fahrer bei der Bedienung der Bedienelemente die Übersicht verlieren kann. Dies bringt wiederum eine erhöhte Ablenkung während des Betriebs des Kraftfahrzeugs und somit ein erhöhtes Unfallrisiko mit sich. Ein weiterer Nachteil von derartigen Bedienanordnungen ist die eingeschränkte Personalisierbarkeit und Unveränderbarkeit der Funktionen.

Um die Ablenkung eines Bedieners eines Kraftfahrzeugs zu verringern, schlägt die US 7,295,904 B2 eine Vorrichtung zum Betreiben von Geräten und Systemen in einem Kraftfahrzeug vor. Die Vorrichtung weist eine oder mehrere berührungsempfindliche Oberflächen auf, die auf dem Lenkrad des Kraftfahrzeugs angebracht sind. Der Bediener kann diese Oberflächen anhand von vorgegebenen Mustern berühren, um Funktionen wie die Steuerung eines Radios oder die Einstellung eines Fensters durchzuführen. Dabei können zumindest einige der vorgegebenen Muster von dem Bediener vorgegeben werden.

Darüber hinaus ist aus der DE 10 2010 012 240 A1 eine Bedienungs- und Anzeigevorrichtung eines Kraftfahrzeugs bekannt. Die Bedienungs- und Anzeigevorrichtung umfasst wenigstens zwei Bedienungseinrichtungen, wobei jeder Bedienungseinrichtung jeweils eine Gruppe von an- und auswählbaren Funktionen zuordenbar ist. Zudem sind die Funktionsgruppen auf einer Anzeigeeinrichtung darstellbar. Dabei ist es vorgesehen, dass für die Darstellung der Funktionsgruppen ein gemeinsamer Anzeigebereich auf der Anzeigeeinrichtung vorgesehen ist und bei einer Annäherung des Bedienmittels an eine der Bedieneinrichtungen und/oder bei Berührung einer derselben im gemeinsamen Anzeigebereichen im Wesentlichen nur die über die jeweilige Bedieneinrichtung jeweils an- und auswählbaren Funktionen angezeigt werden.

Ferner beschreibt die DE 20 2006 008 254 U1 ein Fahrzeugcockpit mit einem Fahrzeuglenkrad, dass eine einem Anwender zugängliche Lenkradaußenfläche aufweist, wobei das Lenkrad derart ausgebildet ist, dass über dieses Fingerbewegungen auf der Lenkradaußenfläche erfassbar sind. Darüber hinaus ist eine Auswerteschaltung zur Generierung von Auswertungssignalen, die als solche mit der Fingerbewegung und der Position des Fingers auf dem Lenkrad in Zusammenhang stehen, vorgesehen.

Es ist Aufgabe der vorliegenden Erfindung eine Lösung aufzuzeigen, wie bei einer Bedienanordnung der eingangs genannten Art der Funktionsumfang erweitert werden kann und zudem ein sicherer Betrieb ermöglicht werden kann.

Diese Aufgabe wird erfindungsgemäß durch ein Verfahren, durch eine Bedienanordnung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben einer Bedienanordnung für ein Kraftfahrzeug. Hierbei wird mittels eines Bedienelements, welches an einem Lenkrad des Kraftfahrzeugs angeordnet ist und welches einen berührungsempfindlichen Bildschirm aufweist, eine Berührung des Bedienelements mit zumindest einem Finger als Bedienhandlung erfasst. Darüber hinaus wird mittels einer Steuereinrichtung ein Gerät in Abhängigkeit von der erfassten Bedienhandlung angesteuert. Zudem wird in einem ersten Bedienmodus des Bedienelements mittels der Steuereinrichtung ein auf einer Anzeigeeinrichtung des Geräts dargestellter Zeiger gesteuert. In einem zweiten Bedienmodus des Bedienelements wird auf dem Bedienelement zumindest eine Schaltfläche angezeigt und die Berührung der Schaltfläche wird als die Bedienhandlung erfasst.

Das Verfahren dient zum Betreiben einer Bedienanordnung, die in einem Kraftfahrzeug verwendet werden kann. Dabei ist ein Bedienelement vorgesehen, das an einem Lenkrad des Kraftfahrzeugs angeordnet ist. Ein solches Lenkrad dient insbesondere zum Ansteuern der lenkbaren Räder des Kraftfahrzeugs. Das Lenkrad weist üblicherweise einen Lenkradkranz und mehrere Speichen auf, über welche der Lenkradkranz an einem Mittelteil des Lenkrads gehalten wird. Dabei kann das Bedienelement an dem Lenkradkranz angeordnet sein. Insbesondere ist das Bedienelement an einer Speiche des Lenkrads angeordnet. Es kann auch vorgesehen sein, dass die Bedienanordnung mehrere Bedienelemente aufweist. Das Bedienelement weist einen berührungsempfindlichen Bildschirm auf. Mit anderen Worten weist das Bedienelement einen sogenannten Touchscreen auf. Das Bedienelement ist dazu ausgelegt, eine Bedienhandlung, die auf dem Bedienelement mit zumindest einem Finger eines Fahrzeuginsassen, insbesondere des Fahrers, durchgeführt wird, zu erfassen. Eine solche Bedienhandlung kann beispielsweise eine Berührung der Oberfläche des berührungsempfindlichen Bildschirms sein. Eine solche Bedienhandlung kann auch eine Wischgeste sein, die auf der Oberfläche durchgeführt wird.

Ferner ist eine Steuereinrichtung vorgesehen, welche zur Datenübertragung mit dem Bedienelement verbunden ist. Die Steuereinrichtung kann beispielsweise durch ein Steuergerät des Kraftfahrzeugs bereitgestellt werden. Wenn mit dem Bedienelement eine Bedienhandlung erfasst wird, kann ein entsprechendes Signal von dem Bedienelement an die Steuereinrichtung übertragen werden. Mit der Steuereinrichtung kann dann ein Gerät in Abhängigkeit von der erfassten Bedienhandlung angesteuert werden.

Das Bedienelement und/oder die Bedienanordnung sind nun in einem ersten und in einem zweiten Bedienmodus betreibbar. In dem ersten Bedienmodus wird in Abhängigkeit von der Bedienhandlung ein Zeiger, welcher auf einer Anzeigeeinrichtung des Geräts dargestellt wird, gesteuert. Mit anderen Worten dient das Bedienelement in dem ersten Bedienmodus als Touchpad, wobei in Folge einer auf dem Bedienelement durchgeführten Bedienhandlung ein Zeiger auf einer Anzeigeeinrichtung gesteuert werden kann. Ein solcher Zeiger, der auf der Anzeigeeinrichtung dargestellt wird, kann auch als Cursor bezeichnet werden. In einem zweiten Bedienmodus wird auf dem Bedienelement zumindest eine Schaltfläche dargestellt. Insbesondere werden auf dem Bedienelement mehrere Schaltflächen dargestellt. Diese Schaltflächen können durch eine Bedienhandlung, insbesondere durch eine Berührung, ausgewählt bzw. bedient werden. Diese Schaltflächen können entsprechenden Funktionen des Geräts zugeordnet sein. Somit kann durch die Bedienung der Schaltfläche die korrespondierende Funktion des Geräts angesteuert werden. Durch die zwei Bedienmodi kann die Bedienanordnung situationsabhängig bzw. zustandsabhängig betrieben werden. Somit wird der Funktionsumfang der Bedienanordnung erweitert.

Bevorzugt wird in dem ersten Bedienmodus eine Position des zumindest einen Zeigers auf dem Bedienelement erfasst und anhand der erfassten Position wird eine Zeigerposition des Zeigers auf der Anzeigeeinrichtung bestimmt. Das Bedienelement ist dazu ausgelegt, die Position des zumindest einen Fingers auf dem Bedienelement bzw. auf einer Oberfläche des Bedienelements zu erfassen. Mit Hilfe der Steuereinrichtung kann in Abhängigkeit von der bestimmten Position eine Zeigerposition bestimmt werden, die der Position des Zeigers auf der Anzeigeeinrichtung entspricht. Das Bedienelement kann auch dazu ausgelegt sein, eine Bewegung des zumindest einen Fingers auf dem Bedienelement zu erfassen und die Steuereinrichtung kann dann den Zeiger auf der Anzeigeeinrichtung entsprechend zu der Bewegung des Fingers bewegen. Somit kann eine Bedienung, wie sie beispielsweise von einem Touchpad eines Computers bekannt ist, ermöglicht werden. Die Anzeigeeinrichtung kann beispielsweise innerhalb des Kraftfahrzeugs angeordnet sein. Sie kann beispielsweise in dem Kombiinstrument, in der Mittelkonsole und/oder in dem Armaturenbrett angeordnet sein. Die Anzeigeeinrichtung kann auch eine sogenannte Kopf-Oben-Anzeige bzw. ein Head-up Display sein. Somit kann mit Hilfe des Bedienelements in dem ersten Bedienmodus ein Zeiger auf einer Anzeigeeinrichtung des Kraftfahrzeugs gesteuert werden.

In einer weiteren Ausführungsform wird in dem ersten Bedienmodus mit dem Zeiger ein Anzeigeelement auf der Anzeigeeinrichtung ausgewählt und in Abhängigkeit von dem ausgewählten Anzeigeelement wird das Gerät angesteuert. Auf der Anzeigeeinrichtung können ein oder mehrere Anzeigeelemente dargestellt werden, die mit jeweiligen Funktionen des Geräts verknüpft sind. Wenn das Gerät ein Informations- und/oder Unterhaltungssystem ist können die Anzeigeelemente beispielsweise Musiktiteln oder Alben zugeordnet sein, die mit dem Zeiger entsprechend ausgewählt und anschließend abgespielt werden können. Zum Auswählen der Anzeigeelemente kann der Zeiger durch eine entsprechende Bedieneingabe auf dem Bedienelement auf das Anzeigeelement bewegt werden. Anschließend kann die Auswahl beispielsweise durch eine entsprechende Bedienhandlung bestätigt werden. Hierzu kann eine Drückbewegung auf das Bedienelement ausgeübt werden. Somit können mit Hilfe des Bedienelements in dem ersten Bedienmodus auf einfache Weise Funktionen des Geräts ausgewählt werden.

In einer weiteren Ausgestaltung wird das Bedienelement in dem ersten Bedienmodus derart angesteuert, dass der berührungsempfindliche Bildschirm eine vorbestimmte Farbe aufweist. Das Bedienelement kann derart angesteuert werden, dass der komplette berührungsempfindliche Bildschirm die gleiche Farbe aufweist. Beispielsweise kann das Bedienelement bzw. der berührungsempfindliche Bildschirm vollständig grau oder schwarz sein. Zu diesem Zweck kann beispielsweise die Anzeige auf dem berührungsempfindlichen Bildschirm deaktiviert werden. Somit kann der berührungsempfindliche Bildschirm lediglich als Eingabegerät bzw. als Touchpad verwendet werden.

In einer weiteren Ausführungsform wird das Gerät in dem zweiten Bedienmodus des Bedienelements durch das Berühren der Schaltfläche angesteuert. Auf dem Bedienelement können ein oder mehrere Schaltflächen angeordnet sein, die jeweiligen Funktionen des Geräts zugeordnet sind. Die Schaltflächchen können entsprechende Symbole darstellen, die mit Funktionen des Geräts verknüpft sind. Durch eine Berührung der Schaltflächen auf dem Bedienelement kann die entsprechende Funktion des Geräts auf einfache Weise angesteuert werden.

Weiterhin ist es vorteilhaft, wenn in dem zweiten Bedienmodus des Bedienelements ein Abbild eines Schaltelements des Geräts als eine Geräteschaltfläche auf dem Bedienelement angezeigt wird und das Gerät in Folge der Berührung der Geräteschaltfläche angesteuert wird. Wenn das Gerät zusätzlich zu der Anzeigeeinrichtung Schaltelemente aufweist, mit denen das Gerät durch eine Berührung der Schaltflächen direkt bedient werden kann, können diese Schaltflächen als Geräteschaltflächen auf dem Bedienelement dargestellt werden. Somit können auf dem Bedienelement sowohl die Schaltflächen als auch die Geräteschaltflächen dargestellt werden.

Bevorzugt wird durch die Ansteuerung des Geräts die dem Schaltelement zugeordnete Funktion bewirkt. Die Datenverbindung zwischen dem Bedienelement und dem Gerät kann derart ausgestaltet sein, dass eine Bedienung bzw. Berührung der Geräteschaltflächen die Funktion bewirkt, welche eine direkte Bedienung bzw. Berührung der Geräteschaltflächen bewirken würde. Es kann also eine sogenannte MirrorLink-Funktion bereitgestellt werden. Dies eignet sich insbesondere, wenn das Gerät ein mobiles Gerät, wie beispielsweise ein Mobiltelefon oder ein tragbarer Computer ist. Somit kann der Fahrer ausgehend vom Lenkrad die Funktionen des Geräts bedienen. Der Fahrer kann quasi ausgehend von dem Lenkrad das Gerät fernsteuern. Somit muss der Fahrer zum Bedienen des Geräts die Hände nicht vom Lenkrad nehmen, wodurch die Verkehrssicherheit erhöht wird.

In einer weiteren Ausführungsform weist das Bedienelement einen statischen Bereich und einen dynamischen Bereich auf, wobei die Bedienhandlung in dem dynamischen Bereich erfasst wird. Mit anderen Worten weist das Bedienelement zwei voneinander räumlich getrennte Bereiche auf. Dabei wird die Anzeige in dem dynamischen Bereich des Bedienelements verändert. In dem statischen Bereich des Bedienelements können ebenfalls Schaltflächen dargestellt werden, mit denen Grundfunktionen bereitgestellt werden können. Solche Grundfunktionen können beispielsweise die Einstellung der Lautstärke, eine Aktivierung einer Spracheingabe oder dergleichen sein. Somit kann eine einfache Bedienung ermöglicht werden.

In einer bevorzugten Ausführungsform weist die Bedienanordnung ein erstes und ein zweites Bedienelement auf, wobei das erste Bedienelement in dem ersten Bedienmodus betrieben wird und das zweite Bedienelement in dem zweiten Bedienmodus betrieben wird. An dem Lenkrad können also zwei Bedienelemente angeordnet sein, die jeweils einen berührungsempfindlichen Bildschirm aufweisen. Beispielsweise können das erste Bedienelement auf einer ersten Seite und das zweite Bedienelement auf einer zweiten Seite des Lenkrads angeordnet sein. Dabei wird das erste Bedienelement in dem ersten Bedienmodus betrieben. Das erste Bedienelement wird also als Touchpad verwendet, um einen Zeiger bzw. Cursor auf der Anzeigeeinrichtung zu steuern. Das zweite Bedienelement dient dazu, die auf dem Bedienelement dargestellten Schaltflächen anzusteuern. Dabei kann es auch vorgesehen sein, dass die jeweiligen Bedienmodi der zwei Bedienelemente situationsabhängig angepasst werden.

In einer weiteren Ausgestaltung wird mittels der Steuereinrichtung das Gerät angesteuert, welches als Mobiltelefon ausgebildet ist. Das Gerät kann ein Mobiltelefon sein, welches insbesondere als Smartphone ausgebildet ist. Das Gerät kann auch als tragbarerer Computer, insbesondere als Laptop, ausgebildet sein. Ferner kann das Gerät als sogenanntes Tablet ausgebildet sein. Dabei ist es auch möglich, dass zwischen der Bedienanordnung und mehreren Geräten eine Datenverbindung aufgebaut wird. Eine solche Datenverbindung kann beispielsweise über ein Datenkabel oder drahtlos erfolgen. Ferner kann es vorgesehen sein, dass durch eine vorbestimmte Bedienhandlung, beispielsweise eine Wischgeste, zwischen den verschiedenen Geräten gewechselt werden kann, welche durch das Bedienelement in dem zweiten Bedienmodus angesteuert bzw. ferngesteuert werden kann. Somit kann eine einfache Bedienung von mehreren mobilen Geräten ermöglicht werden, die in dem Kraftfahrzeug angeordnet sind. Dies eignet sich beispielsweise insbesondere, wenn das Kraftfahrzeug in einem autonomen Betriebsmodus betrieben wird.

Eine erfindungsgemäße Bedienanordnung für ein Kraftfahrzeug umfasst ein Bedienelement, welches einen berührungsempfindlichen Bildschirm aufweist und welches an einem Lenkrad des Kraftfahrzeugs angeordnet ist. Dabei ist das Bedienelement dazu ausgelegt, eine Berührung des Bedienelements als Bedienhandlung zu erfassen. Ferner weist die Bedienanordnung eine Steuereinrichtung auf, welche dazu ausgelegt ist, ein Gerät in Abhängigkeit von der erfassten Bedienhandlung anzusteuern. Zudem ist das Bedienelement dazu ausgelegt, in einem ersten Bedienmodus in Abhängigkeit von der erfassten Bedienhandlung einen auf der Anzeigeeinrichtung dargestellten Zeiger zu steuern und in einem zweiten Bedienmodus auf dem Bedienelement zumindest eine Schaltfläche anzuzeigen und die Berührung der zumindest einen Schaltfläche als die Bedienhandlung zu erfassen. Eine erfindungsgemäße Bedienanordnung ist zum Durchführen eines erfindungsgemäßen Verfahrens ausgelegt.

Ein erfindungsgemäßes Kraftfahrzeug umfasst eine erfindungsgemäße Bedienanordnung. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Bedienanordnung sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmales eines ursprünglich formulierten unabhängigen Anspruchs aufweisen.

Die Erfindung wir nun anhand von bevorzugten Ausführungsbeispielen sowie unter Bezugnahme auf die beigefügten Zeichnungen näher erläutert.

Dabei zeigen:
- Fig. 1: in schematischer Darstellung ein Kraftfahrzeug gemäß einer Ausführungsform der vorliegenden Erfindung, welches eine Bedienanordnung aufweist;
- Fig. 2: die Bedienanordnung in einer weiteren Ausführungsform, wobei die Bedienanordnung zwei Bedienelemente aufweist, die an einem Lenkrad angeordnet sind;
- Fig. 3: ein erstes Bedienelement der Bedienanordnung;
- Fig. 4: ein zweites Bedienelement der Bedienanordnung; und
- Fig. 5: die Bedienanordnung in einer weiteren Ausführungsform, wobei die Bedienanordnung mit einer Mehrzahl von mobilen Geräten verbunden ist.

In den Figuren werden gleiche und funktionsgleiche Elemente mit gleichen Bezugszeichen versehen.

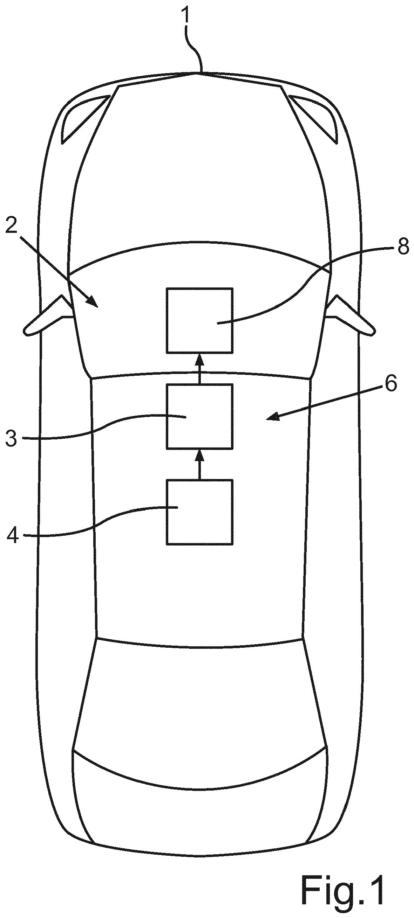

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst eine Bedienanordnung 2, die beispielsweise Teil eines Fahrerassistenzsystems des Kraftfahrzeugs 1 sein kann. Das Fahrerassistenzsystem kann beispielsweise dazu dienen, den Fahrer beim Führen des Kraftfahrzeugs 1 zu unterstützen. Mit Hilfe des Fahrerassistenzsystems kann das Kraftfahrzeug 1 beispielsweise autonom manövriert werden. In diesem Fall übernimmt das Fahrerassistenzsystem die Querführung und/oder Längsführung des Kraftfahrzeugs 1. Das Fahrerassistenzsystem kann also einen Lenkeingriff, einen Eingriff in die Bremsanlage und/oder einen Eingriff in den Antriebsmotor des Kraftfahrzeugs 1 durchführen. Das Kraftfahrzeug 1 kann aber auch manuell betrieben werden. In diesem Betriebsmodus übernimmt der Fahrer sowohl die Längsführung als auch die Querführung des Kraftfahrzeugs 1.

Die Bedienanordnung 2 umfasst eine Steuereinrichtung 3, die beispielsweise durch ein Steuergerät des Kraftfahrzeugs (ECU - Electronic Control Unit) gebildet sein kann. Zudem umfasst die Bedienanordnung 2 zumindest ein Bedienelement 4, mit dem eine Bedienhandlung erfasst werden kann. Das Bedienelement 4 weist einen berührungsempfindlichen Bildschirm auf. Mit dem Bedienelement 4 kann also eine Anzeige bereitgestellt werden. Zudem weist das Bedienelement 4 entsprechende Sensoren auf, mit denen eine Berührung des berührungsempfindlichen Bildschirms erfasst werden kann. Eine derartige Berührung kann beispielsweise durch zumindest einen Finger 9 eines Insassen des Kraftfahrzeugs 1, insbesondere des Fahrers des Kraftfahrzeugs 1, durchgeführt werden. Ferner weist die Bedienanordnung 2 ein Gerät 8 auf, welches vorliegend in dem Innenraum 6 des Kraftfahrzeugs 1 angeordnet ist. Wenn mit dem Bedienelement 4 eine Bedienhandlung erfasst wird, wird ein entsprechendes Signal von dem Bedienelement 4 an die Steuereinrichtung 3 übertragen. Die Steuereinrichtung 3 kann dann in Abhängigkeit von der erfassten Bedienhandlung ein Steuersignal erzeugen und an das Gerät 8 übertragen. Somit kann eine Funktion des Geräts 8 angesteuert werden.

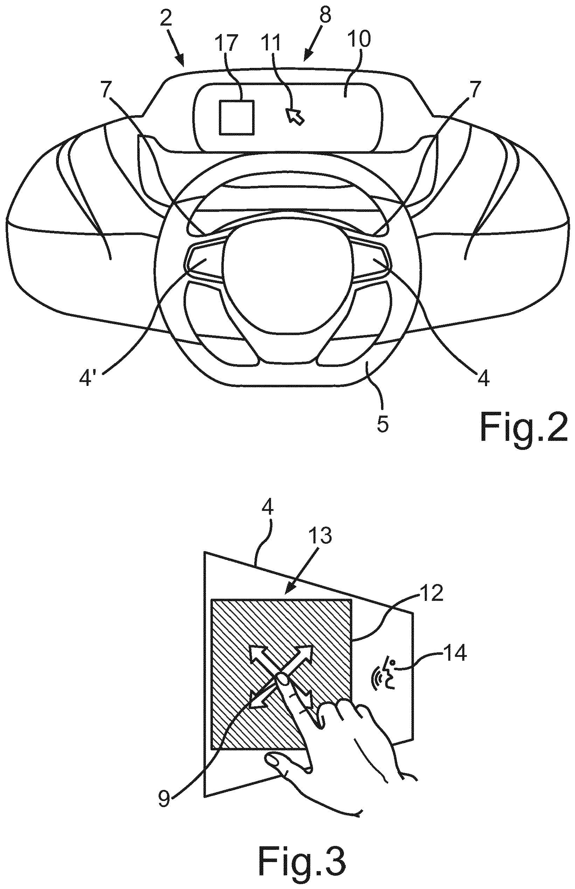

Fig. 2 zeigt die Bedienanordnung 2 in einer weiteren Ausführungsform. In dieser Ausführungsform weist die Bedienanordnung 2 ein erstes Bedienelement 4 und ein zweites Bedienelement 4' auf. Das erste und das zweite Bedienelement 4, 4' sind an den Speichen 7 des Lenkrads angeordnet. Ferner ist zu erkennen, dass das Gerät 8 eine Anzeigeeinrichtung 10 aufweist. Die Anzeigeeinrichtung 10, die beispielsweise ein Bildschirm bzw. ein Display sein kann, ist vorliegend in dem Kombiinstrument des Kraftfahrzeugs 1 angeordnet. Auf der Anzeigeeinrichtung 10 ist ein Zeiger 11 beziehungsweise ein Cursor dargestellt. Zudem ist auf der Anzeigeeinrichtung 10 ein Anzeigeelement 17 dargestellt. Das Anzeigeelement 17 kann mit dem Zeiger 11 ausgewählt werden. Durch die Auswahl des Anzeigeelements 17 kann eine Funktion des Geräts 8 angesteuert werden.

In dem Ausführungsbeispiel gemäß Fig. 2 ist das Gerät 8 Teil des Kraftfahrzeugs 1. Das Gerät 8 kann beispielsweise ein Informations- und/oder Unterhaltungssystem des Kraftfahrzeugs 1 sein. In diesem Fall kann das Anzeigeelement 17 einem Musiktitel oder einem Album zugeordnet sein. Wenn das Anzeigeelement 17 mit dem Zeiger 11 ausgewählt wird, kann beispielsweise der Musiktitel abgespielt werden. Das Gerät 8 kann auch ein Navigationssystem, das Fahrerassistenzsystem, eine Klimaanlage oder dergleichen sein. Es kann auch vorgesehen sein, dass das Gerät 8 ein mobiles Gerät ist, welches im Innenraum 6 des Kraftfahrzeugs 1 angeordnet werden kann. Ein solches mobiles Gerät 8 kann beispielsweise ein Smartphone, ein Tablet oder dergleichen sein.

Fig. 3 zeigt das erste Bedienelement 4, das vorliegend auf der rechten Seite des Lenkrads 5 angeordnet ist. Hier ist zu erkennen, dass das erste Bedienelement 4 zwei Bereiche aufwiest, nämlich einen dynamischen Bereich 12 und einen statischen Bereich 13. In dem dynamischen Bereich 12 kann die Darstellung des berührungsempfindlichen Bildschirms angepasst werden. In dem statischen Bereich 13 können entsprechende Schaltflächen 14 dargestellt werden, mit denen Grundfunktionen bereitgestellt werden können. Vorliegend kann eine Spracheingabe durch eine Berührung der Schaltfläche 14 ermöglicht werden. In dem dynamischen Bereich 12 kann eine Position des Fingers 11 erfasst werden. Anhand der Position kann dann die Steuereinrichtung 3 eine Position des Zeigers 11, der auf der Anzeigeeinrichtung 10 dargestellt wird, bestimmt werden. Der Finger 9 kann in dem dynamischen Bereich 12 des Bedienelements 4 entsprechend bewegt werden, um den Zeiger 11 auf der Anzeigeeinrichtung 10 zu bewegen. Somit dient das Bedienelement 4 in dem ersten Bedienmodus als Touchpad.

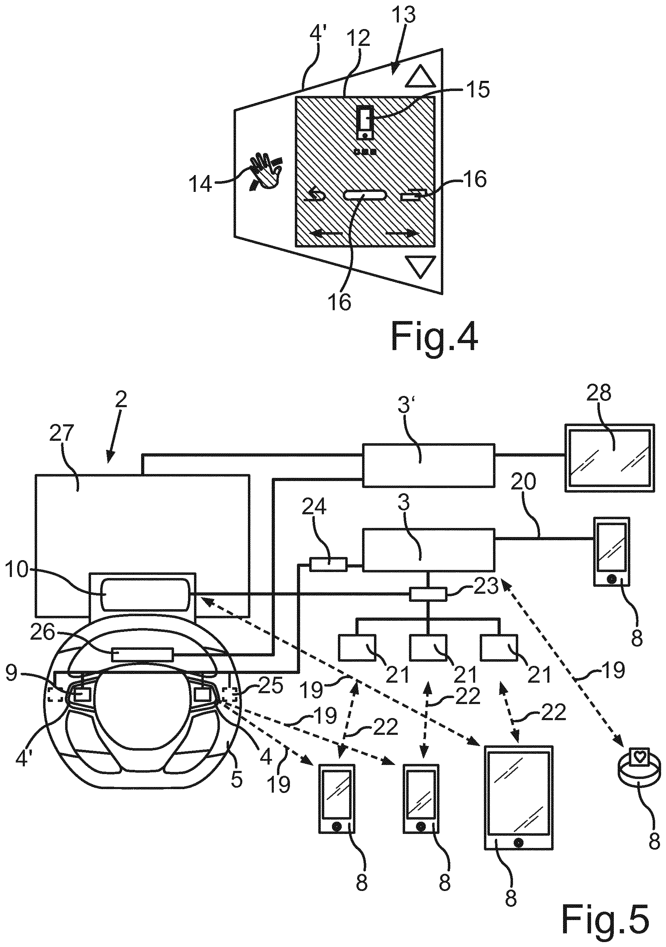

Fig. 4 zeigt das zweite Bedienelement 4', das vorliegend auf der linken Seite des Lenkrads 5 angeordnet ist. Auch das zweite Bedienelement 4' weist einen statischen Bereich 13 und einen dynamischen Bereich 12 auf. Vorliegend werden in dem statischen Bereich 13 ebenfalls Schaltflächen 14 dargestellt, mit denen beispielsweise die Lautstärke geregelt werden kann. Ebenfalls ist eine Schaltfläche 14 dargestellt, mit der ein autonomer Fahrbetrieb angefordert werden kann. Wie nachfolgend näher erläutert kann eine Datenverbindung zwischen dem zweiten Bedienelement 4' und einem mobilen Gerät 8 bereitgestellt werden. Dabei können auch Datenverbindungen zwischen mehreren mobilen Geräten 8 bereitgestellt werden. Diese mobilen Geräte 8 können mit Hilfe einer Bedienhandlung, die auf dem zweiten Bedienelement 4' durchgeführt wird, angesteuert bzw. ferngesteuert werden. In dem dynamischen Bereich 12 wird dem Fahrer eine Schaltfläche 15 angezeigt, die er entsprechend durch eine Berührung bedienen kann. Vorliegend zeigt die Schaltfläche ein mobiles Gerät 8 bzw. Mobiltelefon, welches entsprechend angesteuert werden kann. Zudem werden in dem dynamischen Bereich 12 Geräteschaltflächen 16 angezeigt. Diese Geräteschaltflächen 16 stellen ein Abbild von Schaltelementen des mobilen Geräts 8 dar. Diese Geräteschaltflächen 16 können durch eine entsprechende Bedienhandlung, insbesondere eine Berührung, bedient werden. Wenn die Geräteschaltfläche 16 bedient wird, kann das mobile Gerät 8 so angesteuert werden, wie wenn das Gerät 8 direkt bedient wird. Somit kann das mobile Gerät 8 quasi ferngesteuert werden.

Fig. 5 zeigt beispielhaft, wie die Bedienanordnung 2 mit mehreren mobilen Geräten 8 in dem Kraftfahrzeug 1 gekoppelt werden kann. In dem vorliegenden Ausführungsbeispiel kann die Bedienanordnung 2 mit mehreren mobilen Geräten 8 durch Datenübertragung verbunden sein. Die mobilen Geräte 8 können beispielsweise Mobiltelefone, Smartphones, Tablets, Smartwatches oder Sportarmbänder sein. Die mobilen Endgeräte können beispielsweise über eine Funkverbindung, insbesondere eine Bluetooth-Verbindung, mit den Bedienelementen 4, 4' zur Datenübertragung verbunden sein. Die mobilen Geräte 8 können auch über eine Bluetooth-Verbindung mit der Steuereinrichtung 3 oder der Anzeigeeinrichtung 10 verbunden sein. Eine derartige drahtlose Verbindung ist durch die Pfeile 19 gekennzeichnet. Ferner kann es vorgesehen sein, dass die mobilen Geräte 8 über einen Datenbus 20 mit der Steuereinrichtung 3 verbunden sind. Es können auch verschiedene Kommunikationseinrichtungen 21 vorgesehen sein, über die die mobilen Geräte 8 drahtlos mit der Steuereinrichtung 3 kommunizieren können. Eine solche drahtlose Datenverbindung kann beispielsweise eine Funkverbindung sein, die durch die Pfeile 22 gekennzeichnet ist. Durch eine entsprechende Schnittstelle 23 kann somit die Anzeige der mobilen Geräte 8 auf die Anzeigeeinrichtung 10 übertragen werden. Ferner kann mit Hilfe der Steuereinrichtung 3 über eine entsprechende Schnittstelle 24 die Anzeige in dem dynamischen Bereich 12 des Bedienelements 4, 4' angepasst werden.

Mit Hilfe von Sensorelementen 25 kann zudem überprüft werden, ob sich die Hände des Fahrers momentan am Lenkrad 5 befinden. Die Sensorelemente 25 können beispielsweise kapazitive Sensoren umfassen. Diese Information kann von den Sensorelementen 25 über die Schnittstelle 24 zu der Steuereinrichtung 3 übertragen werden. Ferner kann die Bedienanordnung 2 eine Erfassungseinheit 26 umfassen, mittels welcher die Blickrichtung des Fahrers und/oder eine Position eines Kopfes des Fahrers erkannt werden kann. In Abhängigkeit von dieser Information kann mit einer zweiten Steuereinrichtung 3' die Anzeige auf weiteren Anzeigeeinrichtungen 27, 28 gesteuert werden. Die Anzeigeeinrichtung 27 kann beispielsweise einer Kopf-oben-Anzeige beziehungsweise einem sogenannten Head-up Display zugeordnet sein. Die Anzeigeeinrichtung 28 kann beispielsweise in dem Armaturenbrett des Kraftfahrzeugs 1 sein.

## Patentansprüche

1. Verfahren zum Betreiben einer Bedienanordnung (2) für ein Kraftfahrzeug (1), bei welchem mittels eines Bedienelements (4, 4'), welches an einem Lenkrad (5) des Kraftfahrzeugs (1) angeordnet ist und welches einen berührungsempfindlichen Bildschirm aufweist, eine Berührung des Bedienelements (4, 4') mit zumindest einem Finger (9) als Bedienhandlung erfasst wird und mittels einer Steuereinrichtung (3) ein Gerät (8) in Abhängigkeit von der erfassten Bedienhandlung angesteuert wird,
**dadurch gekennzeichnet, dass**
in einem ersten Bedienmodus des Bedienelements (4, 4') mittels der Steuereinrichtung (3) ein auf einer Anzeigeeinrichtung (10) des Geräts (8) dargestellter Zeiger (11) gesteuert wird und in einem zweiten Bedienmodus des Bedienelements (4, 4') auf dem Bedienelement (4, 4') zumindest eine Schaltfläche (15) angezeigt wird und die Berührung der Schaltfläche (15) als die Bedienhandlung erfasst wird.

2. Verfahren nach Anspruch 1,
**dadurch gekennzeichnet, dass**
in dem ersten Bedienmodus eine Position des zumindest einen Fingers (9) auf dem Bedienelement (4, 4') erfasst wird und anhand der erfassten Position eine Zeigerposition des Zeigers (11) auf der Anzeigeeinrichtung (10) bestimmt wird.

3. Verfahren nach Anspruch 1 oder 2,
**dadurch gekennzeichnet, dass**
in dem ersten Bedienmodus mit dem Zeiger (11) ein Anzeigeelement (17) auf der Anzeigeeinrichtung (10) ausgewählt wird und in Abhängigkeit von dem ausgewählten Anzeigeelement (17) das Gerät (8) angesteuert wird.

4. Verfahren nach einem der vorhergehenden Ansprüche,
**dadurch gekennzeichnet, dass**
das Bedienelement (4, 4') in dem ersten Bedienmodus derart angesteuert wird, dass der berührungsempfindliche Bildschirm eine vorbestimme Farbe aufweist.

5. Verfahren nach einem der vorhergehenden Ansprüche,
**dadurch gekennzeichnet, dass**
das Gerät (8) in dem zweiten Bedienmodus des Bedienelements (4, 4') durch das Berühren der Schaltfläche (15) angesteuert wird.

6. Verfahren nach einem der vorhergehenden Ansprüche,
**dadurch gekennzeichnet, dass**
in dem zweiten Bedienmodus des Bedienelements (4, 4') ein Abbild eines Schaltelements des Geräts (8) als eine Geräteschaltfläche (16) auf dem Bedienelement (4, 4') angezeigt wird und das Gerät (8) in Folge der Berührung der Geräteschaltfläche (16) angesteuert wird.

7. Verfahren nach Anspruch 6,
**dadurch gekennzeichnet, dass**
durch die Berührung der Geräteschaltfläche (16) die dem Schaltelement zugeordnete Funktion bewirkt wird.

8. Verfahren nach einem der vorhergehenden Ansprüche,
**dadurch gekennzeichnet, dass**
das Bedienelement (4, 4') einen statischen Bereich (13) und einen dynamischen Bereich (12) aufweist, wobei die Bedienhandlung in dem dynamischen Bereich (12) erfasst wird.

9. Verfahren nach einem der vorhergehenden Ansprüche,
**dadurch gekennzeichnet, dass**
die Bedienanordnung (2) ein erstes und ein zweites Bedienelement (4, 4') aufweist, wobei das erste Bedienelement (4) in dem ersten Bedienmodus betrieben wird und das zweite Bedienelement (4') in dem zweiten Bedienmodus betreiben wird.

10. Verfahren nach einem der vorhergehenden Ansprüche,
**dadurch gekennzeichnet, dass**
mittels der Steuereinrichtung (3) das Gerät (8) angesteuert wird, welches als Mobiltelefon ausgebildet ist.

11. Bedienanordnung (2) für ein Kraftfahrzeug (1) welche **dadurch gekennzeichnet ist, dass** in einem ersten Bedienmodus des Bedienelements (4, 4') mittels der Steuereinrichtung (3) ein auf einer Anzeigeeinrichtung (10) des Geräts (8) dargestellter Zeiger (11) gesteuert wird, und dass in einem zweiten Bedienmodus des Bedienelements (4, 4') auf dem Bedienelement (4, 4') zumindest eine Schaltfläche (15) angezeigt wird und die Berührung der Schaltfläche (15) als die Bedienhandlung erfasst wird.

12. Kraftfahrzeug (1) mit einer Bedienanordnung (2) nach Anspruch 11.

## Claims

1. Method for operating an operator control arrangement (2) for a motor vehicle (1), in which an operator control element (4, 4') arranged on a steering wheel (5) of the motor vehicle (1) and having a touch-sensitive screen is used to detect a touch of the operator control element (4, 4') with at least one finger (9) as an operator control action and a control device (3) is used to actuate a device (8) on the basis of the detected operator control action,
**characterized in that**
in a first mode of operation of the operator control element (4, 4') the control device (3) is used to control a pointer (11) depicted on a display device (10) of the device (8), and in a second mode of operation of the operator control element (4, 4') at least one button (15) is displayed on the operator control element (4, 4') and the touch of the button (15) is detected as the operator control action.

2. Method according to Claim 1,
**characterized in that**
in the first mode of operation a position of the at least one finger (9) on the operator control element (4, 4') is detected and the detected position is taken as a basis for determining a pointer position of the pointer (11) on the display device (10).

3. Method according to Claim 1 or 2,
**characterized in that**
in the first mode of operation the pointer (11) is used to select a display element (17) on the display device (10) and the selected display element (17) is taken as a basis for actuating the device (8).

4. Method according to one of the preceding claims,
**characterized in that**
the operator control element (4, 4') is actuated in the first mode of operation such that the touch-sensitive screen has a predetermined colour.

5. Method according to one of the preceding claims,
**characterized in that**
the device (8) is actuated in the second mode of operation of the operator control element (4, 4') by the touching of the button (15).

6. Method according to one of the preceding claims,
**characterized in that**
in the second mode of operation of the operator control element (4, 4') an image of a switching element of the device (8) is displayed as a device button (16) on the operator control element (4, 4') and the device (8) is actuated as a consequence of the touch of the device button (16).

7. Method according to Claim 6,
**characterized in that**
the touch of the device button (16) causes the function associated with the switching element.

8. Method according to one of the preceding claims,
**characterized in that**
the operator control element (4, 4') has a static area (13) and a dynamic area (12), the operator control action being detected in the dynamic area (12) .

9. Method according to one of the preceding claims,
**characterized in that**
the operator control arrangement (2) has a first and a second operator control element (4, 4'), the first operator control element (4) being operated in the first mode of operation and the second operator control element (4') being operated in the second mode of operation.

10. Method according to one of the preceding claims,
**characterized in that**
the control device (3) is used to actuate the device (8), which is in the form of a mobile phone.

11. Operator control arrangement (2) for a motor vehicle (1), **characterized in that** in a first mode of operation of the operator control element (4, 4') the control device (3) is used to control a pointer (11) depicted on a display device (10) of the device (8), and **in that** in a second mode of operation of the operator control element (4, 4') at least one button (15) is displayed on the operator control element (4, 4') and the touch of the button (15) is detected as the operator control action.

12. Motor vehicle (1) having an operator control arrangement (2) according to Claim 11.

## Revendications

1. Procédé de fonctionnement d'un système de commande (2) pour un véhicule automobile (1), procédé selon lequel, au moyen d'un élément de commande (4, 4'), lequel est disposé sur un volant de direction (5) du véhicule automobile (1) et lequel comprend un écran tactile, un contact de l'élément de commande (4, 4') avec au moins un doigt (9) est détecté comme une action de commande et un appareil (8) est commandé, au moyen d'un dispositif de commande (3), en fonction de l'action de commande détectée,
**caractérisé en ce que**,
dans un premier mode de commande de l'élément de commande (4, 4'), un pointeur (11) représenté sur un dispositif d'affichage (10) de l'appareil (8) est commandé au moyen du dispositif de commande (3) et, dans un deuxième mode de commande de l'élément de commande (4, 4'), au moins une surface de commutation (15) est affichée sur l'élément de commande (4, 4') et le contact avec la surface de commutation (15) est détecté comme action de commande.

2. Procédé selon la revendication 1,
**caractérisé en ce que**,
dans le premier mode de commande, une position de l'au moins un doigt (9) sur l'élément de commande (4, 4') est détectée et, à l'aide de la position détectée, une position du pointeur (11) sur le dispositif d'affichage (10) est déterminée.

3. Procédé selon la revendication 1 ou 2,
**caractérisé en ce que**,
dans le premier mode de commande, un élément d'affichage (17) sur le dispositif d'affichage (10) est sélectionné à l'aide du pointeur (11) et l'appareil (8) est commandé en fonction de l'élément d'affichage (17) sélectionné.

4. Procédé selon l'une quelconque des revendications précédentes,
**caractérisé en ce que**
l'élément de commande (4, 4') est commandé dans le premier mode de commande de telle sorte que l'écran tactile présente une couleur prédéfinie.

5. Procédé selon l'une quelconque des revendications précédentes,
**caractérisé en ce que**
l'appareil (8) est, dans le deuxième mode de commande de l'élément de commande (4, 4'), commandé par le contact avec la surface de commutation (15).

6. Procédé selon l'une quelconque des revendications précédentes,
**caractérisé en ce que**,
dans le deuxième mode de commande de l'élément de commande (4, 4'), une représentation d'un élément de commutation de l'appareil (8) est affichée en tant que surface de commutation d'appareil (16) sur l'élément de commande (4, 4') et l'appareil (8) est commandé suite au contact avec la surface de commutation d'appareil (16).

7. Procédé selon la revendication 6,
**caractérisé en ce que**
la fonction associée à l'élément de commutation est provoquée par le contact avec la surface de commutation d'appareil (16).

8. Procédé selon l'une quelconque des revendications précédentes,
**caractérisé en ce que**
l'élément de commande (4, 4') comprend une zone statique (13) et une zone dynamique (12), l'action de commande étant détectée dans la zone dynamique (12) .

9. Procédé selon l'une quelconque des revendications précédentes,
**caractérisé en ce que**
le système de commande (2) comprend un premier et un deuxième élément de commande (4, 4'), le premier élément de commande (4) fonctionnant dans le premier mode de commande et le deuxième élément de commande (4') fonctionnant dans le deuxième mode de commande.

10. Procédé selon l'une quelconque des revendications précédentes,
**caractérisé en ce que**
l'appareil (8), qui est réalisé sous forme de téléphone mobile, est commandé au moyen du dispositif de commande (3).

11. Système de commande (2) pour un véhicule automobile (1), lequel système de commande est **caractérisé en ce que**, dans un premier mode de commande de l'élément de commande (4, 4'), un pointeur (11) représenté sur un dispositif d'affichage (10) de l'appareil (8) est commandé au moyen du dispositif de commande (3) et **en ce que**, dans un deuxième mode de commande de l'élément de commande (4, 4'), au moins une surface de commutation (15) est affichée sur l'élément de commande (4, 4') et le contact avec la surface de commutation (15) est détecté comme action de commande.

12. Véhicule automobile (1) comprenant un système de commande (2) selon la revendication 11.
